# EUROPEAN PATENT APPLICATION

(11) **EP 4 246 438 A1**
(43) Date of publication of application: **20.09.2023**
(21) Application number: 20961566.5
(22) Date of filing: 12.11.2020
(51) Int. Cl.: G06T 7/215

(54) **INFORMATION PROCESSING DEVICE, GENERATION METHOD, AND GENERATION PROGRAM**

(71) Applicant: FUJITSU LIMITED, Kawasaki-shi, Kanagawa 211-8588 (JP)
(72) Inventor: TANAKA, Masakiyo, Kawasaki-shi, Kanagawa 211-8588 (JP); NAKAYAMA, Osafumi, Kawasaki-shi, Kanagawa 211-8588 (JP); MURASE, Yuichi, Kawasaki-shi, Kanagawa 211-8588 (JP); SHIODA, Chisato, Kawasaki-shi, Kanagawa 211-8588 (JP)
(74) Representative: Hoffmann Eitle
(86) International application number: PCT/JP2020/042193
(87) International publication number: WO 2022/102038

(57) **Abstract**

An information processing device according to one embodiment includes a specifying unit that specifies, from a moving image obtained by imaging work of a person, a plurality of stationary positions at which the person is stationary and a movement order in which the person moves through the plurality of stationary positions, a division unit that clusters the plurality of stationary positions, and when an obtained cluster includes a pair of stationary positions having a relationship of a movement source and a movement destination in the movement order, further clusters stationary positions included in the cluster to divide the plurality of stationary positions into a plurality of clusters, and a generation unit that generates a region of interest in the moving image based on the plurality of clusters obtained by the division unit.

## Description

### FIELD

The present invention relates to an information processing device, a generation method, and a generation program.

### BACKGROUND

At worksites such as factories, with the aim of improving operations, problems are extracted by measuring and visualizing working hours to evaluate variations in the working hours and comparing work performed by different persons.

Furthermore, as one of work detection methods, there has been a method of generating a region of interest (ROI) according to work for a moving image of a worksite captured by an imaging device, such as a camera, and detecting work of a person based on entrance of the person into the region of interest.

Furthermore, there has been known a technique of performing clustering related to movements of persons (e.g., Patent Documents 1 and 2).

### CITATION LIST

### PATENT DOCUMENT

Patent Document 1: Japanese Laid-open Patent Publication No. 2017-090965
Patent Document 2: International Publication Pamphlet No. WO 2011/013299

### SUMMARY

### [TECHNICAL PROBLEM]

A region of interest may be manually generated while viewing a moving image obtained by imaging work of a person, for example. However, since it takes time and effort to manually generate a region of interest, there is a demand for a technique capable of automatically generating a region of interest highly accurately.

In one aspect, an object of the present invention is to provide a technique capable of automatically generating a region of interest highly accurately.

### [SOLUTION TO PROBLEM]

An information processing device according to one aspect of the present invention includes a specifying unit that specifies, from a moving image obtained by imaging work of a person, a plurality of stationary positions at which the person is stationary and a movement order in which the person moves through the plurality of stationary positions, a division unit that clusters the plurality of stationary positions, and when an obtained cluster includes a pair of stationary positions having a relationship of a movement source and a movement destination in the movement order, further clusters stationary positions included in the cluster to divide the plurality of stationary positions into a plurality of clusters, and a generation unit that generates a region of interest in the moving image based on the plurality of clusters obtained by the division unit.

According to an aspect of the embodiments, an information processing device includes a specifying unit that specifies, from a moving image obtained by imaging work of a person, a first plurality of stationary positions at which the person is stationary and a movement order in which the person moves through the first plurality of stationary positions; a division unit that clusters the first plurality of stationary positions to divide the first plurality of stationary positions into a first plurality of clusters, and when a cluster included in the first plurality of clusters includes a pair of stationary positions with a relationship of a movement source and a movement destination in the movement order, clusters a second plurality of stationary positions included in the cluster to divide the second plurality of stationary positions into a second plurality of clusters; and a generation unit that generates a region of interest in the moving image based on the second plurality of clusters.

### [ADVANTAGEOUS EFFECTS OF INVENTION]

It becomes possible to automatically generate a region of interest highly accurately.

### BRIEF DESCRIPTION OF DRAWINGS

FIG. 1 is a diagram exemplifying work areas in which a person who appears in a moving image according to an embodiment is positioned during work;
FIG. 2 is a diagram exemplifying a plurality of stationary positions of the person detected from the moving image according to the embodiment;
FIG. 3A and FIG. 3B are diagrams exemplifying clustering of the stationary positions;
FIG. 4 is a diagram illustrating a difference in length according to a shooting distance in an exemplary moving image;
FIG. 5 is a diagram exemplifying an imaging system according to the embodiment;
FIG. 6 is a diagram exemplifying a functional block configuration of an information processing device according to the embodiment;
FIG. 7A, FIG. 7B, and FIG. 7C are diagrams exemplifying clustering according to the embodiment;
FIG. 8 is a diagram exemplifying a clustering result of the stationary positions arranged in the moving image;
FIG. 9 is a diagram exemplifying stationary position information according to the embodiment;
FIG. 10 is a diagram exemplifying an operation flow of a region of interest generation process according to the embodiment;
FIG. 11A and FIG. 11B are diagrams exemplifying a flow of region of interest generation and clustering according to the embodiment;
FIG. 12A and FIG. 12B are diagrams exemplifying clustering results; and
FIG. 13 is a diagram exemplifying a hardware configuration of a computer for implementing the information processing device according to the embodiment.

### DESCRIPTION OF EMBODIMENTS

Hereinafter, several embodiments of the present invention will be described in detail with reference to the drawings. Note that corresponding elements in a plurality of drawings are denoted by the same reference sign.

As described above, as one of work detection methods, there has been a method of generating a region of interest for each work area in a moving image of a worksite captured by an imaging device and detecting work of a person based on entrance of the person into the region of interest. Such a detection method is suitable for, for example, use at worksites where a person produces a product while moving through a plurality of work locations, such as cellular manufacturing and a job shop system.

Furthermore, the region of interest may be manually generated while viewing the moving image obtained by imaging the work of the person, for example. However, since it takes time and effort to manually generate a region of interest, there is a demand for a technique capable of automatically generating a region of interest highly accurately.

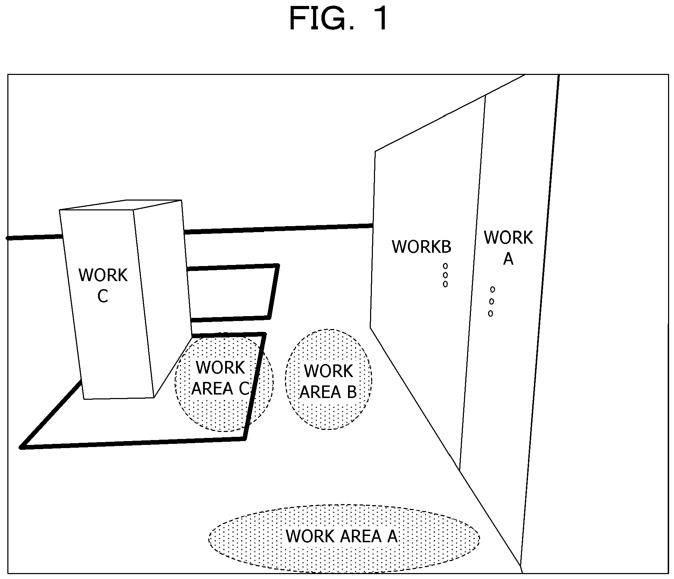

FIG. 1 is a diagram exemplifying work areas in which the person who appears in the moving image according to the embodiment is positioned during the work. In a shooting range of the moving image of FIG. 1, three work A, work B, and work C are illustrated as work locations. Furthermore, FIG. 1 illustrates a work area A where the person is positioned during the work A, a work area B where the person is positioned during the work B, and a work area C where the person is positioned during the work C. Then, it is assumed that the region of interest is desirably generated in those work area A, work area B, and work area C automatically, for example.

Here, for example, it is conceivable to generate, assuming that the person is stationary during the work, the region of interest based on a stationary position by detecting the stationary position at which the person is stationary from the moving image obtained by imaging the work.

In one example, a plurality of the stationary positions of the person is detected from moving images obtained by imaging a plurality of types of work. Note that, in the moving images to be used to detect the stationary positions, a plurality of work operations performed by the same person may be captured, or work performed by a plurality of persons may be captured.

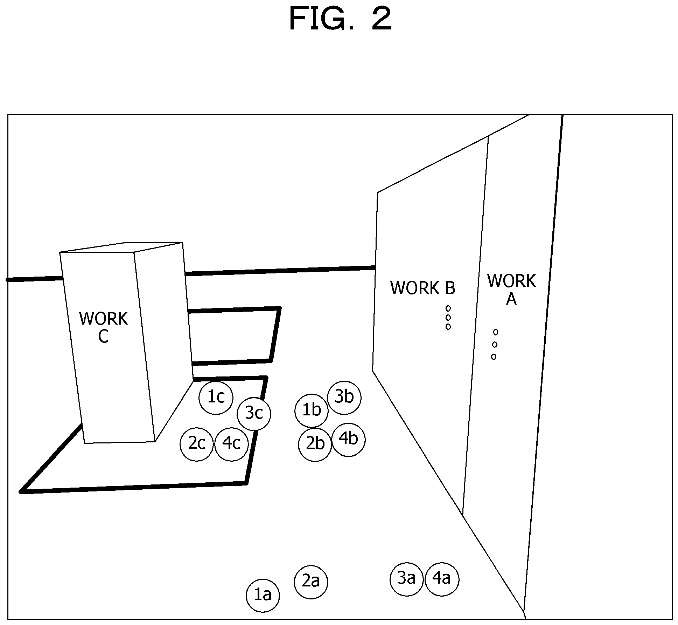

FIG. 2 is a diagram exemplifying a plurality of stationary positions of the person detected from the moving image according to the embodiment. Note that the stationary positions may be specified as, for example, positions at which a person is detected in the moving image and the detected person is stationary in the moving image.

In the example of FIG. 2, four stationary positions 1a, 2a, 3a, and 4a are illustrated as the stationary positions of the person during the work A. Furthermore, four stationary positions 1b, 2b, 3b, and 4b are illustrated as the stationary positions of the person during the work B. Four stationary positions 1c, 2c, 3c, and 4c are illustrated as the stationary positions of the person during the work C. Then, for example, clustering is performed on the plurality of stationary positions detected from the moving image.

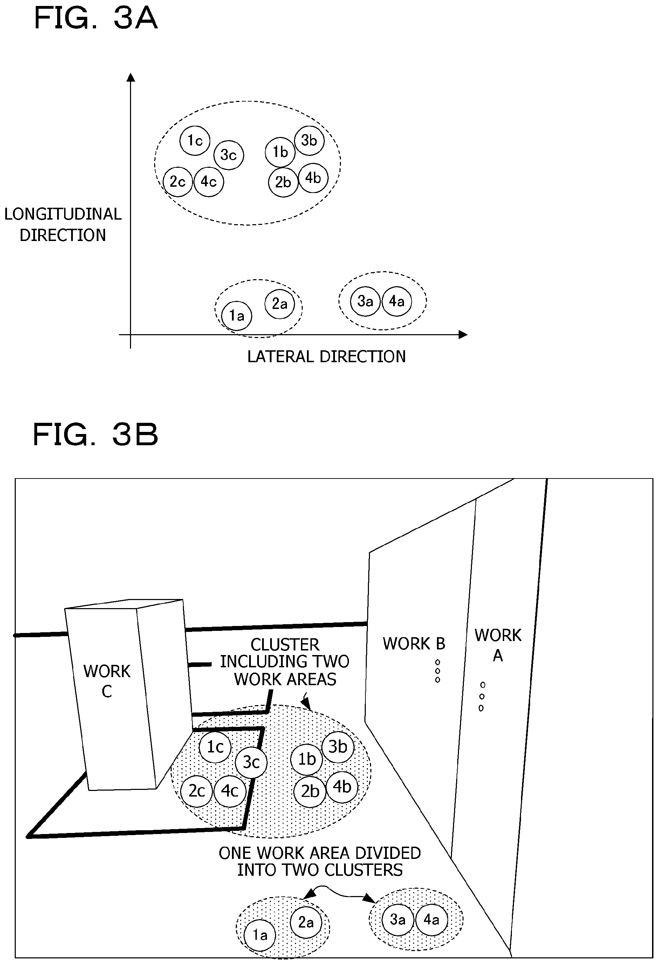

FIG. 3A and FIG. 3B are diagrams exemplifying the clustering of the stationary positions. FIG. 3A illustrates the plurality of stationary positions of the person detected from the moving image. Note that, in FIG. 3A, the vertical axis represents the longitudinal direction of the moving image, and the horizontal axis represents the lateral direction of the moving image. Then, for example, it is conceivable to generate a region of interest by clustering a plurality of stationary positions such that positions close to each other are in the same cluster and regarding the region indicated by the obtained cluster of the stationary positions as a work area where the person is positioned during the work. Note that the clustering maybe performed using, for example, an existing clustering technique such as a K-means method.

However, when the stationary positions are clustered, the obtained cluster may not correspond to the work area of the actual work.

For example, in the shooting range of the moving image captured by an imaging device, stationary positions associated with different types of work may be clustered into one cluster when a distance between work areas associated with those different types of work is close.

Furthermore, for example, in the moving image, a length of an object varies depending on a distance from the imaging device used for imaging.

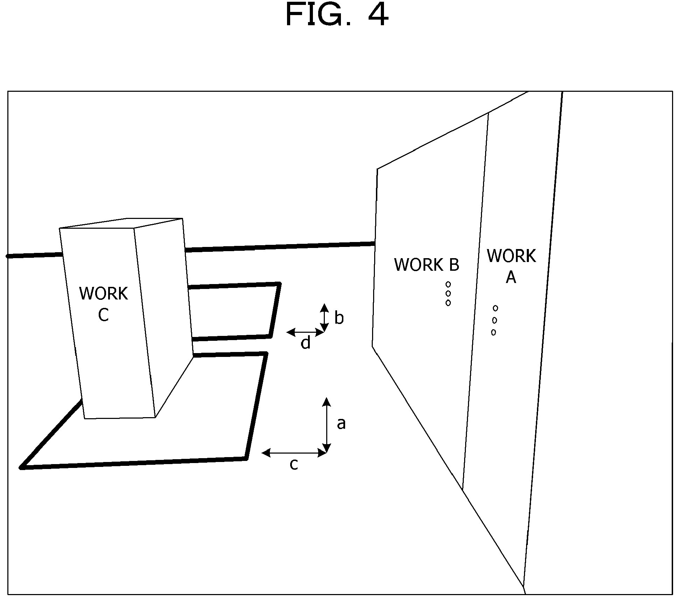

FIG. 4 is a diagram illustrating a difference in length according to a shooting distance in an exemplary moving image. In FIG. 4, arrows are illustrated in the shooting range of the moving image. A length a, a length b, a length c, and a length d indicated by the arrows are all the same length in real space. However, the length in the image is shorter as the distance from the imaging device is longer even if the length is the same in the real space, and thus the arrows in FIG. 4 are illustrated to have different lengths depending on the shooting distance. In this manner, for example, the length in the image is shorter as the distance from the imaging device is longer even if the length is the same in the real space.

Therefore, for example, at positions distant from the imaging device when a plurality of stationary positions of persons detected from the moving image is clustered, a difference in distance between the stationary positions detected from the persons performing different types of work is too small so that the positions may be detected as one cluster. Alternatively, for example, a plurality of stationary positions detected from a person working in a work area close to the imaging device largely varies so that the positions may be detected as a plurality of clusters.

In FIG. 3B, a clustering execution result is superimposed on the shooting range of the moving image. Then, in the clustering execution result of FIG. 3B, the stationary positions located in the work area A of the work A in FIG. 1, which largely vary, are divided into two clusters. On the other hand, the stationary positions located in the work area B of the work B and the work area C of the work C in FIG. 1 are grouped into one cluster in FIG. 3B.

As described above, variations of the stationary positions for one work may differ depending on the position in the image of the work location, work content, and the like. As a result, stationary positions for one work may be divided into a plurality of clusters, and stationary positions for a plurality of types of work may be grouped into one cluster. As a result, at the time of clustering the stationary positions, the obtained cluster may not correspond to the work area of actual work, which may make it difficult to automatically generate a region of interest corresponding to the work based on the cluster of the stationary positions.

In the embodiment to be described below, clustering is performed in such a manner that a cluster obtained by clustering a plurality of stationary positions of a person detected from a moving image does not include a pair of stationary positions having a relationship of a movement source and a movement destination in the movement order in which the person moves through the plurality of stationary positions. Accordingly, it becomes possible to divide the stationary positions into clusters that may be associated with the work area highly accurately. Then, it becomes possible to automatically generate a region of interest associated with the work area highly accurately based on the obtained clusters. Hereinafter, the embodiment will be described in more detail.

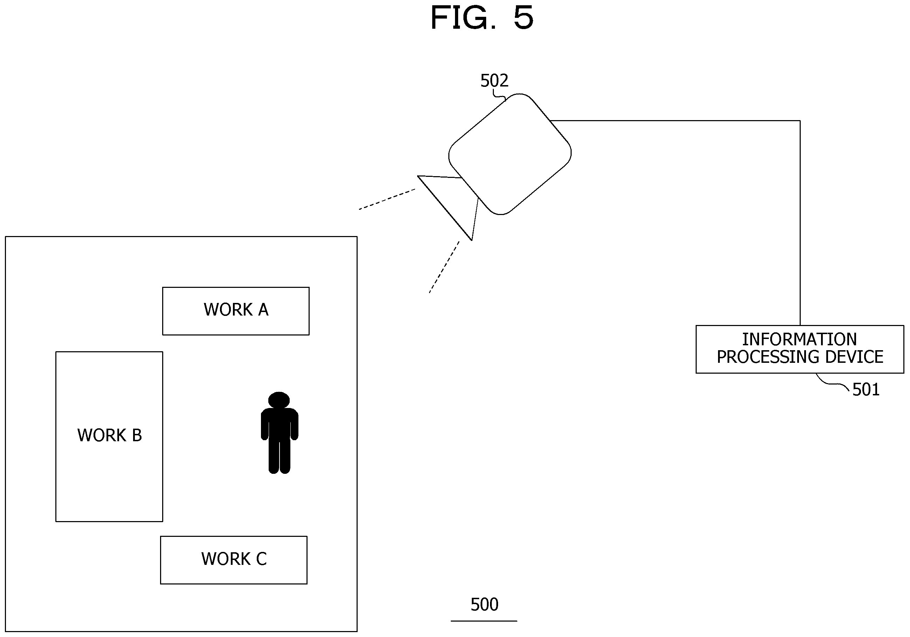

FIG. 5 is a diagram exemplifying an imaging system 500 according to the embodiment. The imaging system 500 includes an information processing device 501 and an imaging device 502. The information processing device 501 may be, for example, a computer having an arithmetic function, such as a server computer, a personal computer (PC), a mobile PC, a tablet terminal, or the like. Furthermore, the imaging device 502 is, for example, a camera. The imaging device 502 may be installed to image a person during a work operation, for example.

The information processing device 501 generates a region of interest based on moving images captured by the imaging device 502, for example. In one example, the information processing device 501 may be coupled to the imaging device 502, and may obtain moving images from the imaging device 502. In another example, the information processing device 501 may obtain moving images captured by the imaging device 502 via another device.

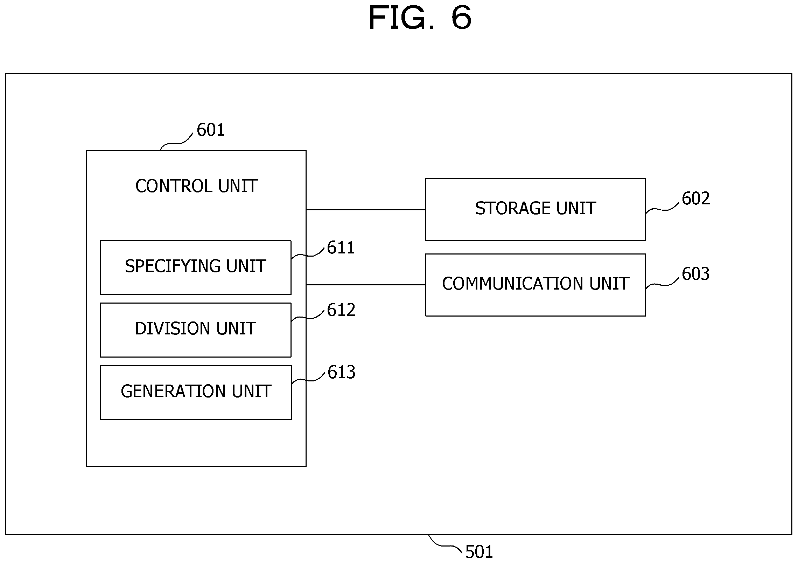

FIG. 6 is a diagram exemplifying a functional block configuration of the information processing device 501 according to the embodiment. The information processing device 501 includes, for example, a control unit 601, a storage unit 602, and a communication unit 603. The control unit 601 includes, for example, a specifying unit 611, a division unit 612, a generation unit 613, and the like, and may include other functional units. The storage unit 602 of the information processing device 501 may store, for example, moving images of work of persons captured by the imaging device 502, and information such as stationary position information 900 to be described later. The communication unit 603 communicates with another device, such as the imaging device 502, according to an instruction from the control unit 601, for example. Details of each of those units and details of the information stored in the storage unit 602 will be described later.

As described above, for example, it is conceivable to generate, assuming that a position of a person is stationary during work, a region of interest based on a stationary position by detecting the stationary position at which the person is stationary from a moving image obtained by imaging the work. Note that it is conceivable that the stationary position may slightly differ depending on the person, and the stationary position of the same person may slightly differ for each work operation. Therefore, for example, a plurality of work operations performed by the same person may be captured and work performed by a plurality of persons may be captured in the moving images.

Then, the control unit 601 detects a person from the captured moving image. The person may be detected using, for example, a known human detection technique. In one example, human detection may be carried out using a technique using local feature values such as Histogram of Oriented Gradients (HOG), OpenPose, or the like. Subsequently, the control unit 601 detects, for example, a position at which the detected person remains stationary while satisfying a predetermined condition as a stationary position. Examples of further details of the stationary position detection will be described later.

Then, for example, it is conceivable to cluster a plurality of stationary positions detected from the moving images, and to use, as a work area, each of obtained clusters of the stationary positions for region of interest generation.

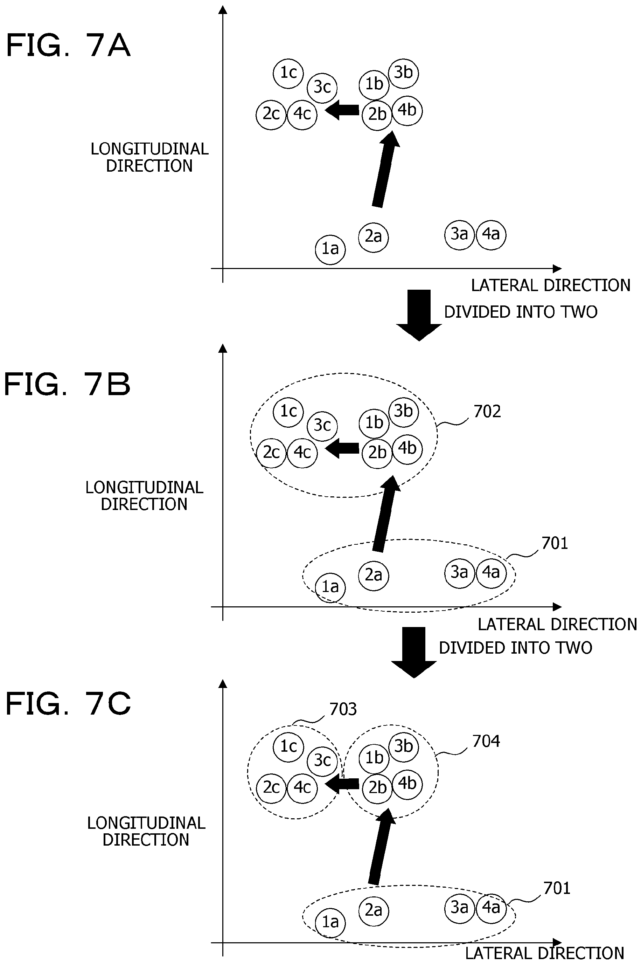

FIG. 7A, FIG. 7B, and FIG. 7C are diagrams exemplifying the clustering according to the embodiment. Note that FIG. 7A, FIG. 7B, and FIG. 7C illustrate a plurality of stationary positions (e.g., Na to Nc). A label N attached to a stationary position may be an identifier assigned to a person detected from a moving image, and FIG. 7A, FIG. 7B, and FIG. 7C illustrate an exemplary case where four persons N = 1 to N = 4 are detected from the moving image. Furthermore, suffixes a, b, and c attached to the label N of the stationary position in FIG. 7A, FIG. 7B, and FIG. 7C indicate work associated with the stationary position. For example, Na is a stationary position detected from a person performing the work A. Furthermore, Nb is a stationary position detected from a person performing the work B. Nc is a stationary position detected from a person performing the work C.

Then, in the embodiment, the control unit 601 also obtains information regarding the movement order in which a person moves between stationary positions at the time of detecting the stationary positions from moving images. For example, in FIG. 7A, FIG. 7B, and FIG. 7C, a person performs work operations in the order of work A, work B, and work C. Then, in FIG. 7A, the information regarding the movement order of the stationary positions is indicated by arrows, and an arrow is illustrated to move from the stationary position Na of the work A to the stationary position Nb of the work B after performing the work A. Moreover, an arrow is illustrated to move from the stationary position Nb of the work B to the stationary position Nc of the work C after performing the work B.

In this case, the control unit 601 may cluster the plurality of detected stationary positions by dividing them into two, which is the minimum number of divisions. FIG. 7B illustrates a result of performing the two-division clustering, and the stationary positions are divided into two clusters including a cluster 701 and a cluster 702.

Here, it is conceivable that, when a person completes a certain work operation and shifts to another work operation, the person moves from the stationary position of the certain work operation to the stationary position of the another work operation, for example. Accordingly, the control unit 601 determines whether or not a pair of stationary positions having a relationship of a movement source and a movement destination is included in the cluster. Then, when a pair of stationary positions having a relationship of a movement source and a movement destination is included in the same cluster, it may be considered that stationary positions associated with a plurality of types of work are mixedly present in the cluster. Accordingly, when a pair of stationary positions having a relationship of a movement source and a movement destination is included in the cluster, the control unit 601 further performs clustering by dividing the cluster into two. On the other hand, when a pair of stationary positions having a relationship of a movement source and a movement destination is not included in the cluster, the control unit 601 may end the clustering of the cluster.

For example, in FIG. 7B, the cluster 701 does not include a movement destination of the stationary position Na. Thus, the control unit 601 may finish dividing the cluster 701.

On the other hand, in FIG. 7B, the cluster 702 includes the stationary position Nc, which is the movement destination of the stationary position Nb, for example. Thus, the control unit 601 may determine that the cluster 702 includes a pair of stationary positions having a relationship of a movement source and a movement destination, and may further perform clustering on the cluster 702 by dividing it into two.

FIG. 7C is a diagram illustrating a result of performing the clustering on the cluster 702 by dividing it into two. In FIG. 7C, the stationary positions included in the cluster 702 are clustered into a cluster 703 and a cluster 704. Furthermore, since neither the cluster 703 nor the cluster 704 includes a pair of stationary positions having a relationship of a movement source and a movement destination, the control unit 601 may finish clustering the cluster 703 and the cluster 704.

As described above, by performing the clustering using the information regarding the movement order, it becomes possible to divide the stationary positions into clusters well associated with work areas. Then, it becomes possible to generate a work area and a corresponding region of interest highly accurately based on the clusters of the stationary positions obtained by the division.

For example, when a pair of stationary positions having a relationship of a movement source and a movement destination is included in the same cluster, it is considered that stationary positions associated with a plurality of types of work are mixedly present in the cluster, and the cluster is further divided. Accordingly, it becomes possible to highly accurately separate a stationary position of certain work from a stationary position of another work at a close distance. For example, at a worksite where a person produces a product while moving through a plurality of work locations, such as the cellular manufacturing and the job shop system, a flow line may be designed to minimize a movement distance of the person during execution of a series of work operations to enhance work efFiciency. Even in such a case, according to the clustering according to the embodiment, it becomes possible to divide stationary positions associated with two adjacently arranged work areas highly accurately, and to automatically generate a region of interest based on the clusters of divided stationary positions highly accurately.

Moreover, in the example of FIG. 7, the control unit 601 performs clustering step by step by halving. Thus, it becomes possible to suppress excessive division of stationary positions associated with one work into a plurality of clusters at the time of clustering.

Note that, while the labels N of the stationary positions are present in association with work with the suffixes a, b, and c in the example of FIG. 7A, FIG. 7B, and FIG. 7C, the labels are not necessarily associated with work at the time of actually detecting the stationary positions from the moving images, and it is sufficient if the movement order of the stationary positions for each person is identified.

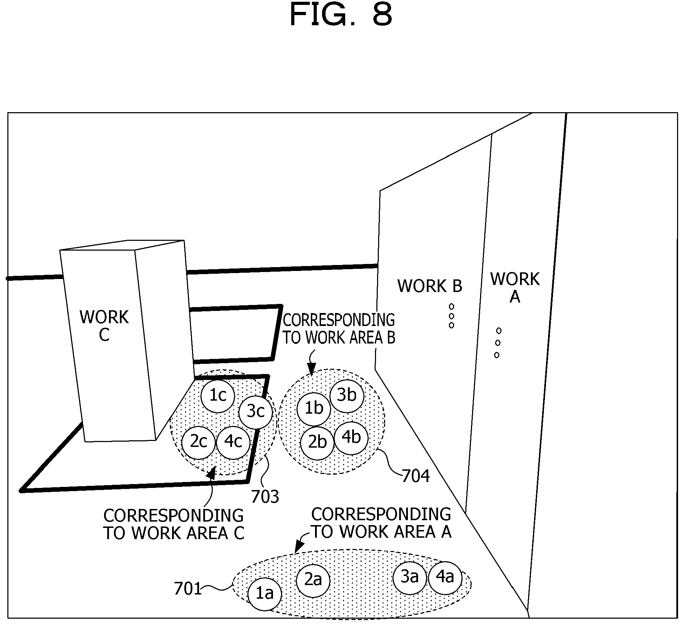

FIG. 8 is a diagram exemplifying a clustering result of the stationary positions arranged in the moving image. As illustrated in FIG. 8, each cluster of the stationary positions is at the position corresponding to the work area described with reference to FIG. 1. Thus, the control unit 601 is enabled to generate a region of interest for the work area of each work based on the cluster of the stationary positions.

For example, as described above, it becomes possible to suppress excessive division and insufficient division for difFerences in clustering and to perform clustering well associated with work by performing the clustering step by step using the information indicating the movement order of the stationary positions.

Hereinafter, a region of interest generation process according to the embodiment will be described.

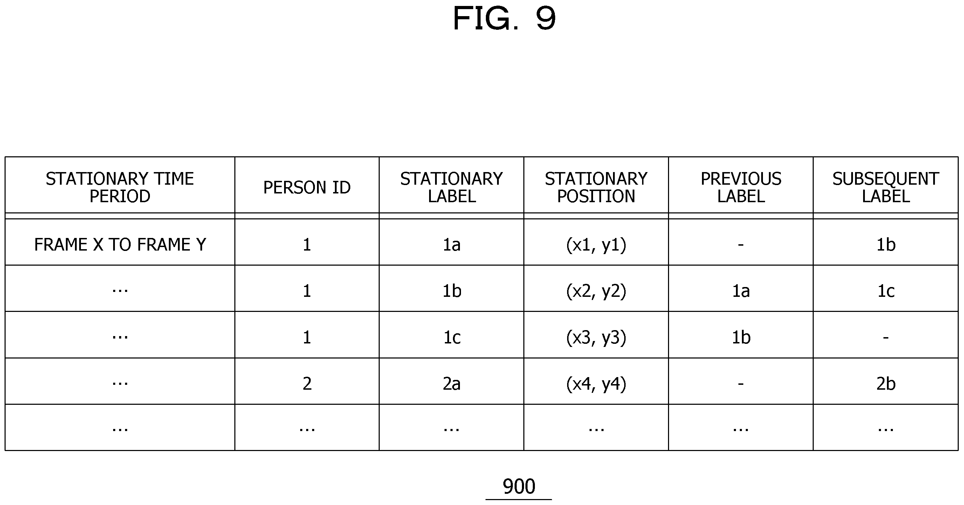

FIG. 9 is a diagram exemplifying the stationary position information 900 according to the embodiment. For each stationary position detected from the moving image, a record including information related to the stationary position is registered in the stationary position information 900. In FIG. 9, a record that associates pieces of information regarding a stationary time period, a person identifier (ID), a stationary label, a stationary position, a previous label, and a subsequent label is registered in the stationary position information 900.

The stationary time period is information indicating, for example, a time period during which a person detected from the moving image remains stationary while satisfying a predetermined condition. In the stationary position information 900 in FIG. 9, the stationary time period is registered as a frame period in which the stationary state of the person is detected.

The person ID is an identifier assigned to identify a person detected from the moving image. In the person ID of the stationary position information 900, for example, a person ID for identifying a person detected to be in the stationary state in the stationary time period of the record is registered.

The stationary label is a label assigned to, for example, a stationary position detected in the stationary time period of the record. In one example, when a plurality of stationary time periods is detected from the moving image for a specific person identified by the person ID, a series of labels may be assigned as the stationary label according to the order in which the stationary time periods have been detected for the person in the moving image. For example, in the stationary position information 900 in FIG. 9, Nx is assigned as a stationary label to the stationary position. N of Nx may be a person ID. Furthermore, x of Nx may be a value representing the order of detection of the stationary time periods, and a label is assigned to each person in alphabetical order starting with a. For example, in the stationary position information 900 in FIG. 9, the person identified by the person ID: 1 moves between the stationary positions in the order of 1a, 1b, and 1c in the moving image.

As the stationary position of the stationary position information 900, for example, information indicating a position of a person detected in the stationary time period of the record may be registered. The stationary position may be expressed by, for example, coordinates indicating a position in a frame image of the moving image. In one example, the coordinates may be represented by the number of pixels in the longitudinal and lateral directions from a predetermined pixel to the stationary position in the frame image.

As the previous label of the stationary position information 900, for the person identified by the person ID of the record, a stationary label of a stationary position detected immediately before the stationary position of the record may be registered. Furthermore, as the subsequent label of the stationary position information 900, for the person identified by the person ID of the record, a stationary label of a stationary position detected immediately after the stationary position of the record may be registered. Note that, in the stationary position information 900 in FIG. 9, the stationary label, the previous label, and the subsequent label are movement information representing the movement order of the person. Furthermore, in the stationary position information 900 in FIG. 9, when no immediately preceding or immediately succeeding stationary position is detected in the moving image, "-" indicating that there is no corresponding stationary position is registered.

Next, an operation flow of the region of interest generation process according to the embodiment will be described.

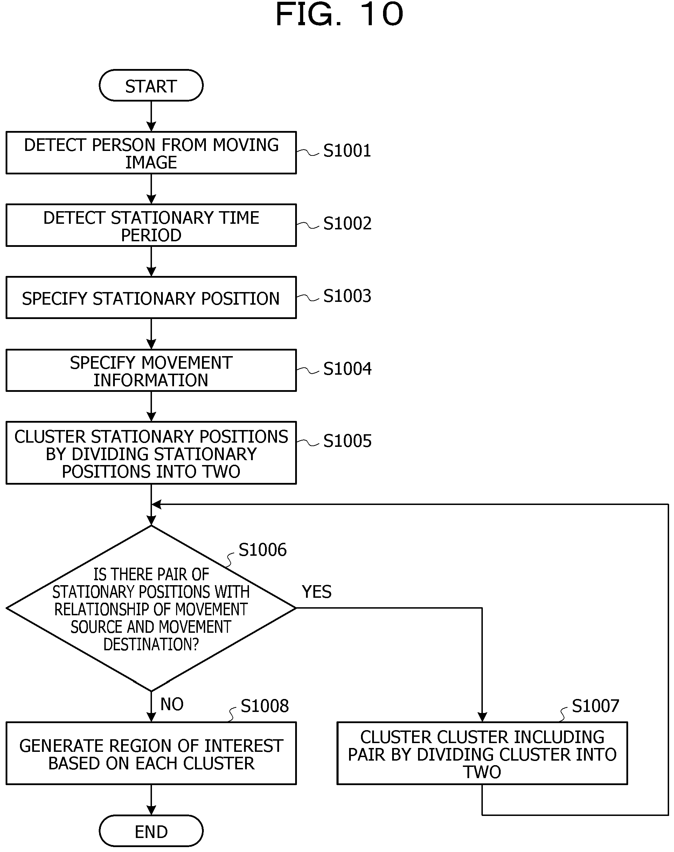

FIG. 10 is a diagram exemplifying the operation flow of the region of interest generation process according to the embodiment. For example, the control unit 601 may start the operation flow of FIG. 10 upon reception of an instruction to perform the region of interest generation process based on the moving image.

In step 1001 (hereinafter, step will be written as "S" and for example, written as S1001), the control unit 601 carries out human detection from the moving image. For example, the control unit 601 cuts out a frame image of each frame from the moving image. Then, the control unit 601 performs the human detection on the cut out frame image, and extracts information regarding a person and a skeleton of the person, such as joint positions. The human detection and the skeleton extraction may be carried out using, for example, a technique using local feature values such as HOG, or a known technique such as OpenPose. Then, the control unit 601 assigns a person ID to the person detected from the moving image.

In S1002, the control unit 601 detects, for each detected person, a stationary time period during which the person remains stationary while satisfying a predetermined condition in the moving image. For example, for each detected person, the control unit 601 may trace movement of the person in the moving image to determine whether or not the person is moving or stationary. Note that the determination on whether the person is stationary may be made using various known techniques.

For example, the control unit 601 may specify a stationary time period in the moving image as a section in which a predetermined part of the person based on the skeleton information of the detected person does not move while satisfying a predetermined condition. In one example, the control unit 601 may determine the stationary state in the section between the current frame and the previous frame when a distance between ankle coordinates of the person present in the current frame image and ankle coordinates of the person present in the previous frame image is equal to or less than a predetermined threshold. Then, the control unit 601 may extract, as a stationary time period, a time period during which the stationary state continues for equal to or more than a predetermined number of frames, and may assign a stationary label to the extracted stationary time period. For example, the control unit 601 may assign Nx to the stationary time period as the stationary label. N of Nx may be a person ID, x may be a value representing the order of detection of the stationary time periods, and a label may be assigned in alphabetical order starting with a. Then, the control unit 601 registers, in the stationary position information 900, a record in which the stationary time period detected for the person is associated with the person ID and the stationary label.

In S1003, the control unit 601 specifies a stationary position of the person for each stationary time period detected from the moving image. In one example, the control unit 601 may specify, as the stationary position, a representative position representing a position of a predetermined part of the person in each frame in the stationary time period. For example, the control unit 601 may average the ankle positions in the individual frames in the stationary time period to use it as a stationary position. Note that the representative position according to the embodiment is not limited to this, and another statistical value, such as a median value, may be used as the representative position instead of the average. Then, the control unit 601 may register the coordinates of the specified stationary position in association with the stationary time period in the record of the stationary position information 900 registered in S1002.

In S1004, the control unit 601 specifies movement information. For example, the control unit 601 may specify, as the movement information, pieces of information indicating the stationary labels of the stationary time periods immediately before and immediately after the certain stationary time period specified for the person, and registers them as the previous label and the subsequent label of the stationary position information 900, respectively.

In S1005, the control unit 601 clusters the stationary positions by dividing them into two. For example, the control unit 601 may cluster the stationary positions registered in the stationary position information 900 into two clusters using an existing clustering technique such as the K-means method.

In S1006, the control unit 601 determines whether or not there is a pair of stationary positions having a relationship of a movement source and a movement destination in the movement order in which the person detected from the moving image moves through the stationary positions in the cluster obtained by the clustering. Then, if there is a pair of stationary positions having a relationship of a movement source and a movement destination (YES in S1006), the flow proceeds to S1007. For example, the control unit 601 may refer to the record of the stationary position information 900 for the stationary position included in the cluster, and may determine as YES in S1006 if the stationary position registered as the previous label or the subsequent label of the record is included in the same cluster.

In S1007, the control unit 601 further performs clustering on the cluster including the pair of stationary positions having a relationship of a movement source and a movement destination by dividing it into two, and the flow returns to S1006 to repeat the process.

On the other hand, if there is no cluster including a pair of stationary positions having a relationship of a movement source and a movement destination in the clusters obtained by the clustering (NO in S1006), the flow proceeds to S1008. For example, the control unit 601 may refer to the record of the stationary position information 900 for the stationary position included in the cluster, and may determine as NO in S1006 if the stationary position registered as the previous label or the subsequent label of the record is not included in the same cluster.

In S1008, the control unit 601 generates a region of interest based on the cluster obtained by the clustering, and the flow is terminated. For example, the control unit 601 may generate a region of interest to include at least a part of the stationary positions included in the cluster.

For example, the control unit 601 may generate, as the region of interest, a rectangular region including the maximum value and the minimum value in each axis direction of the coordinates of the stationary position included in the cluster. Alternatively, for example, the control unit 601 may generate an interior region by connecting the stationary positions included in the cluster and arranged on the outermost sides, and use it as the region of interest. Note that the generation of the region of interest based on the cluster of the stationary positions is not limited to those, and may be generated using other techniques.

As described above, according to the embodiment, it becomes possible to highly accurately generate the region of interest in the moving image based on the stationary positions to be detected.

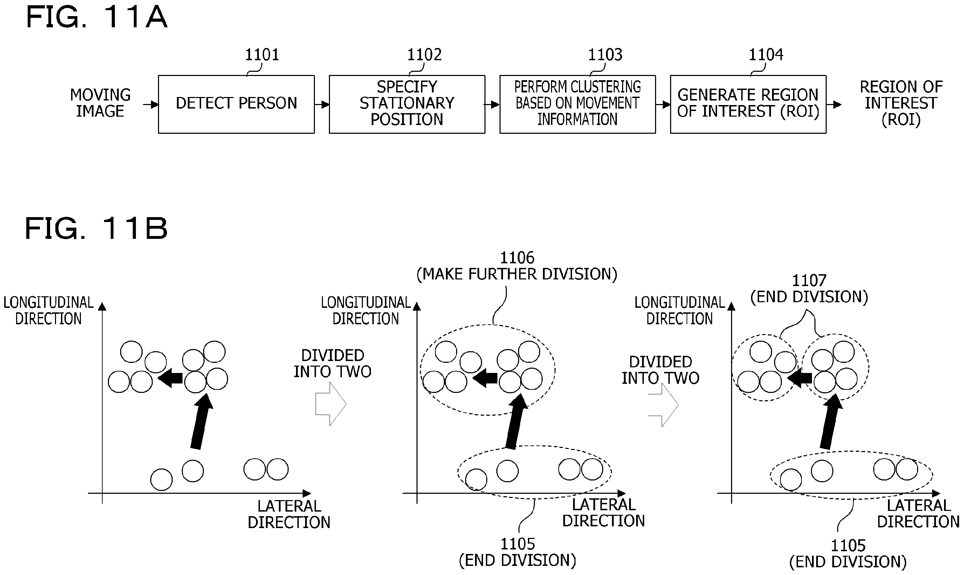

FIG. 11A and FIG. 11B are diagrams exemplifying a flow of the region of interest generation and the clustering according to the embodiment. FIG. 11A illustrates an example in which a region of interest is automatically generated when a moving image is input as input data. For example, when a moving image is input, the control unit 601 of the information processing device 501 detects a person from the moving image (1101 in FIG. 11A), and specifies stationary positions of the detected person (1102 in FIG. 11A). Then, the control unit 601 of the information processing device 501 clusters the specified stationary positions based on information regarding movement of the person (1103 in FIG. 11A).

FIG. 11B exemplifies a flow of the clustering based on the movement information. The control unit 601 of the information processing device 501 divides the detected stationary positions into two. Then, if the cluster obtained by the division does not include a pair of stationary positions having a relationship of a movement source and a movement destination, the division is terminated (1105 in FIG. 11B). On the other hand, if the cluster obtained by the division includes a pair of stationary positions having a relationship of a movement source and a movement destination, it is further divided into two (1106 in FIG. 11B). Then, when the cluster obtained by the division no longer includes a pair of stationary positions having a relationship of a movement source and a movement destination, the division is terminated (1107 in FIG. 11B).

Subsequently, the control unit 601 of the information processing device 501 generates and outputs a region of interest based on the obtained cluster of the stationary positions (1104 in FIG. 11A). Thus, it becomes possible to perform the clustering while reducing the influence of variations of the stationary positions and distances from the imaging device, and to generate a region of interest from the clusters highly accurately associated with work.

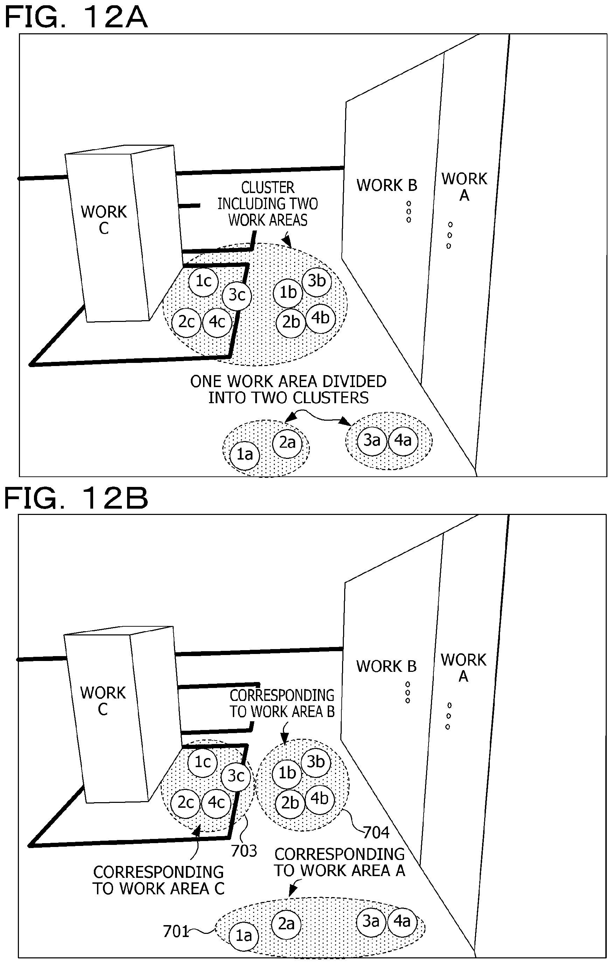

FIG. 12A and FIG. 12B are diagrams exemplifying clustering results. FIG. 12A illustrates the clustering result described with reference to FIG. 3B. In the example of FIG. 12A, the stationary positions associated with the work area A of the work A are divided into two clusters. Furthermore, the stationary positions associated with two types of work, the work B and the work C, are clustered into one cluster.

Meanwhile, FIG. 12B illustrates the clustering result described with reference to FIG. 8. In the example of FIG. 12B, a cluster is formed in each of the work area A of the work A, the work area B of the work B, and the work area C of the work C. Accordingly, it becomes possible to highly accurately generate a region of interest for detecting a person who remains stationary to perform each work from the stationary positions included in the cluster.

Although the embodiment has been exemplified above, the embodiment is not limited to this. For example, the operation flow described above is exemplary, and the embodiment is not limited to this. If possible, the operation flow may be performed by changing the processing order, may further include additional processing, may omit a part of the process, or may replace a part of the process.

For example, in the processing of S1005 and S1007 in FIG. 10 described above, the example of performing the two-division clustering has been described. By dividing the clusters into two, which is the minimum number, step by step in this manner, it becomes possible to suppress excessive division of stationary positions associated with one work into a plurality of clusters. However, the embodiment is not limited to this. Another embodiment may include division into more than two clusters. In one example, when a size of a generated cluster is extremely larger than a size of a person to be detected, it is assumed that the division is insufficient. Thus, for example, when the size of the generated cluster is larger than the size of the person to be detected by equal to or higher than a predetermined ratio, the control unit 601 may increase the number of divisions to perform clustering.

Furthermore, although the ankle has been exemplified as a predetermined part of the person used to determine the stationary state in the embodiment described above, the embodiment is not limited to this, and another part may be used. As another example, the stationary state may be determined using coordinates of the heels of the person or coordinates of the center of gravity of the body such as the back.

Furthermore, although the example of determining the stationary state when the movement of the predetermined part in successive frames is equal to or less than the threshold has been described in the embodiment above, the embodiment is not limited to this. In another embodiment, a threshold to be used to determine whether or not a person is stationary may be appropriately set according to the size of the person present in a frame image, such as by multiplying the distance between the knee joint and the ankle of the person present in the frame image by a predetermined coefficient. As described above, since the size of the person present in the frame image varies depending on the distance from the imaging device, it becomes possible to improve the accuracy in determining the stationary state by relatively setting a threshold based on a distance between joints detected from the person or the like.

Moreover, the algorithm for determining the stationary state according to the embodiment is not limited to the example described above. In another example, the control unit 601 may determine a time period during which a person continuously moves for equal to or more than a predetermined number of frames, such as the person keeps moving for 10 consecutive frames, as movement, and may specify a time period with no movement as a stationary time period. Alternatively, the control unit 601 may detect a stationary time period when movement of the person is not detected at equal to or more than a predetermined rate in a predetermined period of time. Moreover, for the stationary state detection, another algorithm may be used as long as one stationary position may be detected for a person detected from a moving image during a period of time from the start to the end of one work, for example.

Then, for example, a stationary position and work are well associated when the algorithm for the stationary state detection is adjusted such that one stationary position may be detected from the person performing one work, whereby it becomes possible to improve the accuracy in generating a region of interest for the work based on the clustering described above.

Furthermore, although the example of applying the embodiment to the setting of the region of interest used to detect the work of the person has been described above, the embodiment is not limited to this. For example, an object for which a region of interest is generated may be an object other than a person, such as an animal or a machine. For example, the embodiment may be applied to set a region of interest in a region where another part and another object, which repeatedly move and stop, enter a stationary state in a moving image.

In the embodiment described above, the control unit 601 operates, for example, as the specifying unit 611 in the processing of S1003 and S1004. Furthermore, the control unit 601 operates, for example, as the division unit 612 in the processing of S1005 and S1007. The control unit 601 operates, for example, as the generation unit 613 in the processing of S1008.

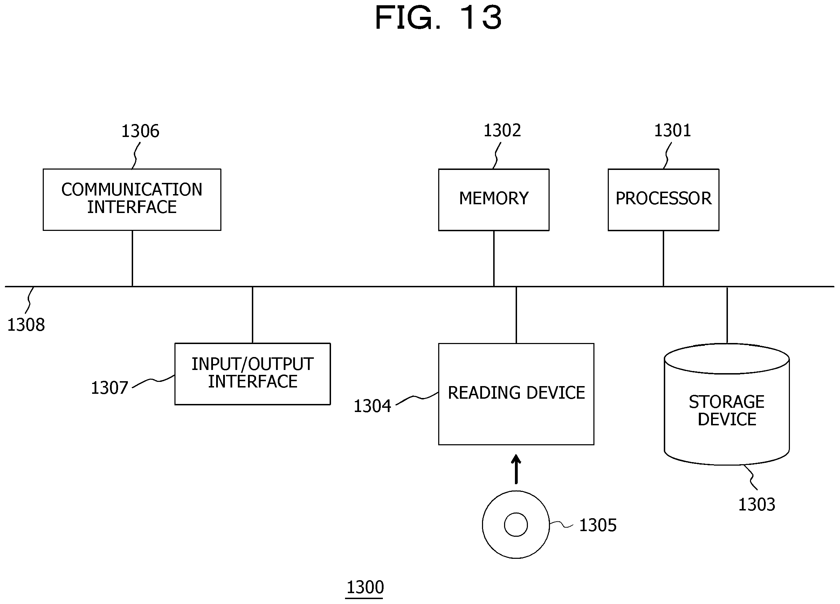

FIG. 13 is a diagram exemplifying a hardware configuration of a computer 1300 for implementing the information processing device 501 according to the embodiment. The hardware configuration for implementing the information processing device 501 in FIG. 13 includes, for example, a processor 1301, a memory 1302, a storage device 1303, a reading device 1304, a communication interface 1306, and an input/output interface 1307. Note that the processor 1301, the memory 1302, the storage device 1303, the reading device 1304, the communication interface 1306, and the input/output interface 1307 are coupled to each other via a bus 1308, for example.

The processor 1301 may be, for example, a single processor, a multiprocessor, or a multicore processor. The processor 1301 executes a program describing procedures of the operation flow described above, for example, using the memory 1302, thereby providing a part or all of the functions of the control unit 601 described above. For example, the processor 1301 of the information processing device 501 reads and executes the program stored in the storage device 1303, thereby operating as the specifying unit 611, the division unit 612, and the generation unit 613.

The memory 1302 is, for example, a semiconductor memory, and may include a RAM region and a ROM region. The storage device 1303 is, for example, a semiconductor memory such as a hard disk or a flash memory, or an external storage device. Note that the RAM is an abbreviation for random access memory. In addition, the ROM is an abbreviation for read only memory.

The reading device 1304 accesses a removable storage medium 1305 in accordance with an instruction from the processor 1301. The removable storage medium 1305 is implemented by, for example, a semiconductor device, a medium to and from which information is input and output by magnetic action, a medium to and from which information is input and output by optical action, or the like. Note that the semiconductor device is, for example, a universal serial bus (USB) memory. Furthermore, the medium to and from which information is input and output by magnetic action is, for example, a magnetic disk. The medium to and from which information is input and output by optical action is, for example, a CD-ROM, a DVD, or a Blu-ray disc (Blu-ray is a registered trademark), or the like. The CD is an abbreviation for compact disc. The DVD is an abbreviation for digital versatile disk.

The storage unit 602 includes, for example, the memory 1302, the storage device 1303, and the removable storage medium 1305. For example, the storage device 1303 of the information processing device 501 stores moving images obtained by capturing work, and the stationary position information 900.

The communication interface 1306 communicates with another device in accordance with an instruction from the processor 1301. In one example, the communication interface 1306 may exchange data with another device, such as the imaging device 502, via wired or wireless communication. The communication interface 1306 is an example of the communication unit 603 described above.

The input/output interface 1307 may be, for example, an interface between an input device and an output device. The input device is, for example, a device that receives an instruction from a user, such as a keyboard, a mouse, or a touch panel. The output device is, for example, a display device such as a display, or an audio device such as a speaker.

Each program according to the embodiment is provided to the information processing device 501 in the following forms, for example.
(1) Installed on the storage device 1303 in advance.
(2) Provided by the removable storage medium 1305.
(3) Provided from a server such as a program server.

Note that the hardware configuration of the computer 1300 for implementing the information processing device 501 described with reference to FIG. 13 is exemplary, and the embodiment is not limited to this. For example, a part of the configuration described above may be removed, and a new configuration may be added. Furthermore, in another embodiment, for example, a part or all of the functions of the control unit 601 described above may be implemented as hardware including FPGA, SoC, ASIC, PLD, or the like. Note that the FPGA is an abbreviation for field programmable gate array. The SoC is an abbreviation for system-on-a-chip. The ASIC is an abbreviation for application specific integrated circuit. The PLD is an abbreviation for programmable logic device.

Several embodiments have been described above. However, the embodiments are not limited to the embodiments described above, and it should be understood that the embodiments include various modifications and alternatives of the embodiments described above. For example, it would be understood that various embodiments may be embodied by modifying components without departing from the spirit and scope of the embodiments. Furthermore, it would be understood that various embodiments may be implemented by appropriately combining a plurality of components disclosed in the embodiments described above. Moreover, a person skilled in the art would understand that various embodiments may be implemented by removing some components from all the components indicated in the embodiments or by adding some components to the components indicated in the embodiments.

### REFERENCE SIGNS LIST

- 500: Imaging system
- 501: Information processing device
- 502: Imaging device
- 601: Control unit
- 602: Storage unit
- 603: Communication unit
- 611: Specifying unit
- 612: Division unit
- 613: Generation unit
- 1300: Computer
- 1301: Processor
- 1302: Memory
- 1303: Storage device
- 1304: Reading device
- 1305: Removable storage medium
- 1306: Communication interface
- 1307: Input/output interface
- 1308: Bus

## Claims

1. An information processing device comprising:
a specifying unit that specifies, from a moving image obtained by imaging work of a person, a first plurality of stationary positions at which the person is stationary and a movement order in which the person moves through the first plurality of stationary positions;
a division unit that clusters the first plurality of stationary positions to divide the first plurality of stationary positions into a first plurality of clusters, and when a cluster included in the first plurality of clusters includes a pair of stationary positions with a relationship of a movement source and a movement destination in the movement order, clusters a second plurality of stationary positions included in the cluster to divide the second plurality of stationary positions into a second plurality of clusters; and
a generation unit that generates a region of interest in the moving image based on the second plurality of clusters.

2. The information processing device according to claim 1, wherein the division unit divides the second plurality of stationary positions into two.

3. The information processing device according to claim 1 or 2, wherein the specifying unit specifies a stationary time period during which a predetermined part of the person based on a skeleton of the person in the moving image satisfies a predetermined condition and does not move, and specifies, as the stationary position, a representative position that represents a position of the predetermined part in a frame image of the stationary time period.

4. The information processing device according to any one of claims 1 to 3, wherein when the cluster included in the first plurality of clusters does not include the pair of stationary positions with the relationship of the movement source and the movement destination in the movement order, the division unit does not further cluster the second plurality of stationary positions included in the cluster.

5. A generation method executed by a computer, the generation method comprising:
specifying, from a moving image obtained by imaging work of a person, a first plurality of stationary positions at which the person is stationary and a movement order in which the person moves through the first plurality of stationary positions;
clustering the first plurality of stationary positions to divide the first plurality of stationary positions into a first plurality of clusters;
when a cluster included in the first plurality of clusters includes a pair of stationary positions with a relationship of a movement source and a movement destination in the movement order, clustering a second plurality of stationary positions included in the cluster to divide the second plurality of stationary positions into a second plurality of clusters; and
generating a region of interest in the moving image based on the second plurality of clusters.

6. A generation program that causes a computer to execute a process, the process comprising:
specifying, from a moving image obtained by imaging work of a person, a first plurality of stationary positions at which the person is stationary and a movement order in which the person moves through the first plurality of stationary positions;
clustering the first plurality of stationary positions to divide the first plurality of stationary positions into a first plurality of clusters;
when a cluster included in the first plurality of clusters includes a pair of stationary positions with a relationship of a movement source and a movement destination in the movement order, clustering a second plurality of stationary positions included in the cluster to divide the second plurality of stationary positions into a second plurality of clusters; and
generating a region of interest in the moving image based on the second plurality of clusters.
